# EUROPEAN PATENT SPECIFICATION

(11) **EP 2 650 237 B1**
(45) Date of publication and mention of the grant of the patent: **26.11.2014**
(21) Application number: 13162092.4
(22) Date of filing: 03.04.2013
(51) Int. Cl.: B65G 1/137

(54) **Method and device for collecting products from product containers in collecting containers according to orders**
Verfahren und Vorrichtung zum Sammeln von Produkten aus Produktbehältern beim Sammeln von Behältern nach Bestellungen
Procédé et dispositif permettant de collecter des produits à partir de récipients de produits dans des récipients de collecte selon des ordres

(30) Priority: 12.04.2012 NL 2008631
(43) Date of publication of application: 16.10.2013
(73) Proprietor: Vanderlande Industries B.V., 5466 RB Veghel (NL)
(72) Inventor: Van De Plassche, Evert Johan, 5406 AS UDEN (NL); Van Putten, Roy Alexander, 5237 EA 's-HERTOGENBOSCH (NL); Coolen, Louis Willem Jan, 5627 HA EINDHOVEN (NL)
(74) Representative: Algemeen Octrooi- en Merkenbureau B.V.

(56) References cited:
- DE-A1-102006 057 658
- DE-A1-102009 023 808
- US-A- 5 281 081

## Description

The present invention relates to a method according to the preamble of claim 1.

Such a method is known from US 5 281 081 A. This method uses a stowage device including a supply conveyor system provided with a refuge track conveyor, as well as an industrial robot. Containers carrying products of different kinds are supplied via the supply conveyor system. Products are stowed on pallets in two cycles. During stowing the containers may be temporarily taken into the refuge conveyor before being transferred away from the robot.

In the automated collection of products from product containers in collecting containers according to orders to that effect it is important to supply collecting containers to be filled with products from an order at a collecting station or at least a collecting location and to present at the collecting location a flow of product containers from which products can be picked up and subsequently placed in a collecting container. This requires logistic control. In practice it sometimes appears during the collecting process that products (or the associated product containers) are not available for completing an order. In such a case new product containers are supplied until a product container containing the missing product arrives at the collecting location. In the meantime the collecting container in question stops the supply of other collecting containers. It is also an option to discharge the collecting container in question and fill it with the missing products yet at the same collecting location (after having returned it) or at another location when a product container containing said products is available at the collecting location in question.

In German publication DE 10 2006 057 658 a description is given of an order collecting system in which use is made of three robots, each robot having a number of pivotally interconnected arms. One of the robots picks up one or a number of similar products from a first conveyor. The other two robots are centrally disposed in two squares zones that are surrounded by rack walls comprising rack positions.

The picked-up products are either directly transferred to one of the other robots at a transfer position of the associated zone by said one robot, or temporarily stored at a storage position near the transfer position to be picked up at a later stage by the respective other robot. Said other robot then moves the products to one of the rack positions of the zone in question. Once all the products associated with a specific order have been collected in a zone, the products are subsequently picked up again by the robot associated with said zone and collected in a collecting container. Collecting containers are conveyed to and away from the other robots by a second conveyor.

An important drawback of the order collecting system described above is the fact that the system is relatively complex and therefore costly, partially because of the use of three robots and the rack walls comprising rack positions. In addition, the method carried out by the system for collecting orders is complex, because intermediate storage in one of the rack positions first takes place for all products. As a result, a relatively great deal of manipulation of the products takes place.

The object of the present invention is to provide a method as described in the introduction by means of which orders can be collected from product containers n collecting containers in a highly efficient, automated manner, and which, in addition, makes it possible to use a relatively simple and inexpensive design for the collecting station. In order to achieve that object, the method according to the invention is characterized by the characterizing features of claim 1.

Storing products temporarily at a buffer location within the working range (in case B) has the significant advantage that a larger part of the collecting containers that are present within the working range can be completely filled, or that it can at least be said that the collecting containers can be filled to a larger extent. As a result, less manipulation of collecting containers and product containers will be necessary, and/or the working range, and thus the amount of space taken up by the collecting station, can be relatively small. In addition, the method according to the invention provides possibilities of flexibly dealing with interruptions in the supply of product containers and collecting containers that occur in practice. In case of a delay in the supply of a collecting container it is nevertheless possible for a product container in which a product or products for that collecting container are present to pick up said products already from the product container. As a result, the aforesaid delay in the supply of the collecting container will not result, or at least only to a significantly smaller extent, in a hold-up in the through-flow of product containers.

It will be understood that in case B as described above the manipulator, after having placed a product on the buffer location, can pick up further products from the same product container or another product container according to case A or case B, and that the manipulator will then pick up said product from the buffer location and place it into the collecting container that has been allocated to the order in question.

Preferably, if neither case A nor case B applies, no product is picked up from the product container in question by the manipulator. The first conveying system can subsequently be controlled in such a manner by the control means that the product container in question is conveyed further within the working range, whilst at a later stage, i.e. when a collecting container that has been allocated to an order with which products in the product container in question are associated is actually present within the working range, a product can optionally be picked up from the product container yet. Or, if the product container is already present at a position furthest downstream within the working range, the first conveying system can be controlled in such a manner that the product container will leave the working range.

Preferably, the control means more specifically determine whether
A orders to which the collecting containers within the working range have been allocated include products that are present in the most downstream product container, i.e. the product container that is located at a position located furthest downstream, within the working range,
B orders to which a particular number of collecting containers upstream of the working range have been allocated include products that are present in the most downstream product container within the working range.

The most downstream product containers will be to first to leave the working range of the manipulator, and consequently it is advantageous to determine precisely for the products present in said product containers whether there will be a need within the working station shortly afterwards, because of orders, for one or a number of such products, because in that case a collecting container to which an order of which the product in question forms part has been allocated will enter the working range.

More in general it is advantageous if the determining step by the control means more specifically comprises determining whether condition A or condition B applies for at least one product container present within the working range each time a product container enters the working range, and/or if the determining step by the control means more specifically comprises determining whether condition A or condition B applies for at least one product container present within the working range each time a collecting container enters the working range.

Preferably, the steps of conveying successive product containers and successive collecting containers, respectively, into and out of the working range comprise the step of index-conveying, wherein the determining step by the control means is carried out after each indexing step of the first and the second conveying system, respectively.

In order to be able to carry out the method according to the invention by means of a relatively simple and inexpensive collecting station it is preferable if, in case A, one and the same gripping element of the manipulator picks up a product from a product container and places the product directly, i.e. without intermediate storage or transfer, into a collecting container, and/or that, in case B, one and the same a gripping element of the manipulator picks up a product from a product container and places it on to the buffer location, and also picks up the products from the buffer location and places it into the collecting container.

A controllable process is realised especially if said particular number of collecting containers according to case B is greater than half the maximum number of collecting containers within the working range and smaller than double the maximum amount of collecting containers within the working range. The phrase "maximum number of collecting containers within the working range" is understood to mean the maximum number of collecting containers that can be present within the working range on the second conveying system.

The present invention further provides a device, preferably a device for carrying out the above-described method according to the present invention, according to claim 9.

The advantages of such a device have already been explained in the foregoing in the description of the method according to the invention.

If neither case A nor case B applies, the manipulator is controlled in such a manner that preferably no product is picked up from the product container in question by the manipulator. The first conveying system can subsequently be controlled in such a manner by the control means that the product container in question is conveyed further within the working range, whilst at a later stage, i.e. when a collecting container that has been allocated to an order with which products in the product container in question are associated is actually present within the working range, a product can be picked up from the product container yet. Or, if the product container is already present at a position furthest downstream within the working range, the first conveying system can be controlled in such a manner that the product container will leave the working range.

Preferably, the buffer location is provided directly above the first conveying path. As a rule such positioning of the buffer location can be achieved quickly by the gripping element, which has a positive effect on productivity.

Furthermore preferably, the buffer location is disposed at most 10 cm above the level of a product container on the first conveying system. Thus, the vertical distance to be covered by the gripping element for placing a product from a product container on to the buffer location will remain limited.

For reasons of constructional simplicity, the buffer location is preferably stationary.

In order to minimise the average spacing between the product containers and the collecting containers, it is preferable if the first conveying path and the second conveying path extend parallel to each other. The distance that the manipulator must on average cover for transferring a product from a product container to a collecting container will thus remain limited, which has an additional positive effect on productivity.

For reasons of constructional simplicity and in order to reduce the cost price it is preferable if the manipulator comprises a horizontal guide for guiding the gripping element in a horizontal direction parallel to the first conveying path and/or to the second conveying path.

In particular if, according to a previously discussed preferred embodiment, the first conveying path and the second conveying path extend parallel to each other, it is furthermore preferable if the manipulator comprises a further horizontal guide for guiding the gripping element in a horizontal direction perpendicular to the first conveying path and/or the second conveying path, wherein advantageously the further horizontal guide is jointly movable with the gripping element along the horizontal guide.

In order to make it possible in a constructionally simple manner to pick up a product from a product container and, if desired, place a product into a collecting container, it is preferable if the manipulator comprises a vertical guide for guiding the gripping element in a vertical direction, which vertical guide is furthermore preferably jointly movable with the gripping element along the further horizontal guide and/or the vertical guide is jointly movable with the gripping element along the horizontal guide.

To increase the capacity of the device according to the invention, a further preferred embodiment is **characterised in that** the device comprises a further second conveying system for conveying successive collecting containers into and out of the working range according to a further second conveying path, wherein the second conveying path and the further second conveying path furthermore preferably extend parallel to each other.

The invention will be explained in more detail hereinafter by means of a description of an embodiment of a device according to the invention, which can be operated in accordance with the method according to the invention. In the description, reference is made to the following schematic figures:
Figure 1 is a perspective view of an embodiment of a device according to the invention;
Figure 2 is a schematic top plan view of the device of figure 1, including part of the surroundings thereof;
Figure 3 shows a flow diagram of a preferred embodiment of a method according to the invention.

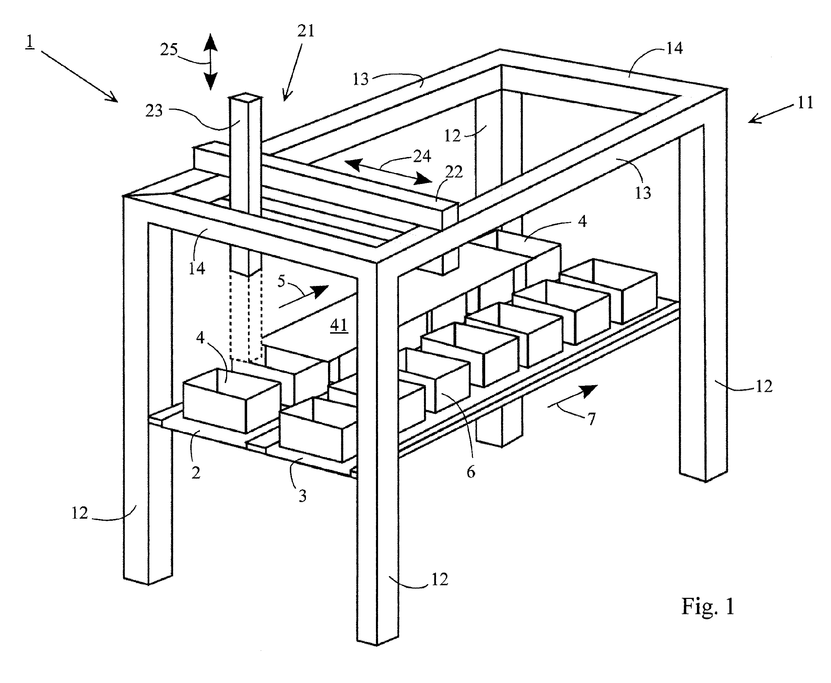

Figure 1 shows a possible embodiment of a collecting device according to the invention. More specifically, an automated order picking station 1 is concerned. The order picking station 1 comprises two parallel conveyors 2, 3. The conveyor 2 is intended for conveying product bins 4 functioning as product containers according to a first conveying path, whilst the conveyor 3 is intended for conveying collecting bins 6 functioning as collecting containers in the conveying direction 7 according to a second conveying path. The conveyors 2, 3 may be belt type or roller type conveyors.

The order picking station 1 further comprises a portal construction 11 comprising four upright legs 12 on the corners of the portal construction 11 and, at the upper ends of the legs 12, two respective longitudinal members 13 and to respective cross members 14.

The order picking station 1 further comprises an orthogonal pick and place manipulator in the form of a robot system 21. The robot system 21 comprises a guide 22, which itself is reciprocally movable in the longitudinal direction of the longitudinal members 13 and relative to which the vertical arm 23 is reciprocally movable both in the horizontal transverse direction 24 and in the vertical direction 25. At the lower end of the vertical arm 23, a gripping element (not shown) is provided, by means of which products can be picked up from a product bin 4 and be placed into a collecting bin 6. Such a gripping element may comprise suction cups or clamping jaws, for example. The type of clamping elements is not essential within the framework of the present invention.

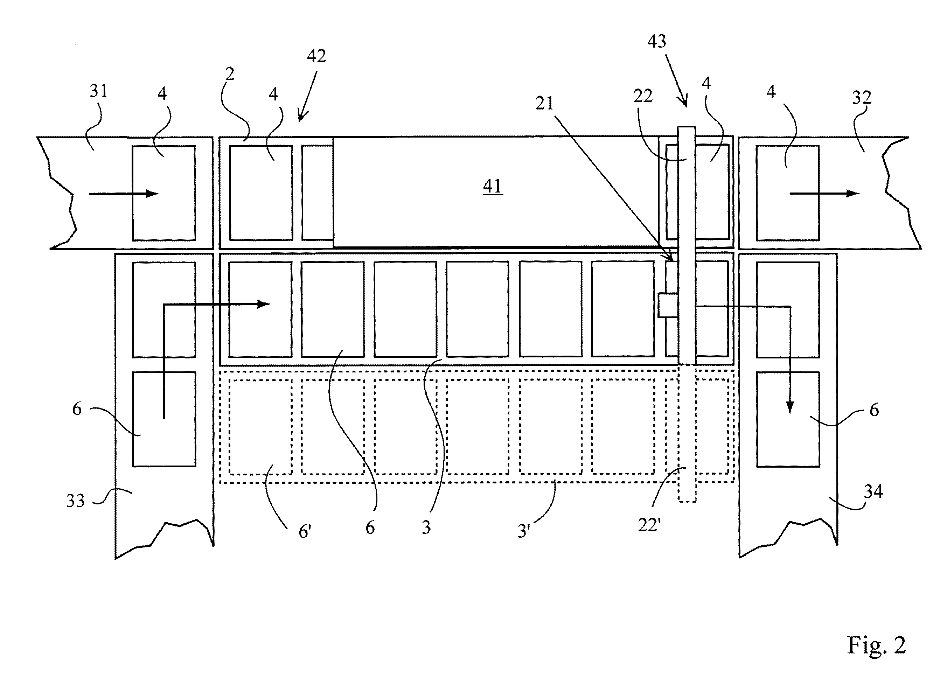

Referring now to figure 2, a supply conveyor 31 for product bins 4 joins the upstream end of the conveyor 2, whilst a discharge conveyor 32 for product bins 4 joins the downstream end of the conveyor 2. The supply conveyor 31 is capable of transferring products bins 4 to the conveyor 2, whilst the discharge conveyor 32 is capable of taking over product bins 4 from the conveyor 2. Thus, products bins 4 can be conveyed through the working range of the robot system 21. The working range of the robot system 21 is the area that can be reached by the gripping element. Seen in top plan view, the working range is the area within the rectangle of which the uprights 12 form the corner points.

A supply conveyor 33 for collecting bins 6 joins the upstream end of the conveyor 3, whilst a discharge conveyor 34 for collecting bins 6 joins the downstream end of the conveyor 3. The supply conveyor 33 is capable of transferring collecting bins 6 to the conveyor 3, for example aided by a pusher element, whilst the discharge conveyor 34 is capable of taking over collecting bins 6 from the conveyor 3, for example aided by a pulling element. Collecting bins 6 can thus be conveyed through the working range of the robot system 21.

Halfway the length of the conveyor 2, a buffer plate 41 functioning as a buffer location is provided above the conveyor 2, just above (for example 5 cm or 10 cm above) the upper sides of the product bins 4 on the conveyor 2, which buffer plate 41 renders the product bins 4 present thereunder inaccessible to the gripping element of the robot 21. Located at two opposite ends of the buffer plate 41, however, are areas 42, 43 where product bins 4 present at those locations can be reached by the gripping element. Products contained in said product bins 4 can thus be removed therefrom by means of the robot 21.

The automated order picking station 1 functions as follows: the control system associated with the order picking station 1 receives orders for collecting products (as a rule different products) in the respective collecting bins 6 according to orders to that effect. The products in question are stored in product bins 4, which are in turn stored in a warehouse. Each product bin 4 only contains products of the same type. The control system sees to it that product bins 4 containing the products that are to be collected according to orders to that effect are supplied to the conveyor 2 of the order picking station 1 via the supply conveyor 31.

The starting point is the situation in which the robot 21 picks up one product or a number of products from a product bin 4 when the product bin 4 in question is present in the downstream area 43. According to an order, the product in question or a number of products are placed into one of the collecting bins 6 on the conveyor 3, to which end the vertical arm 23, once the product has been engaged by the gripping element, will move upward as indicated by the arrow 25 and subsequently in transverse direction along the guide 22 as indicated by the arrow 24 to a position above the conveyor 3 and, if necessary, in the longitudinal direction of the longitudinal members 13 until the vertical arm 23 reaches a position above the collecting bin 6 in which the product in question is to be collected. At that location, the gripping element can release the product so that it will fall into the collecting bin 6 in question, or the vertical arm 23 can first move downward, if desired, so as to reduce the height of the fall or actually deposit the product into the collecting bin 6.

It is conceivable that products are to be collected in different collecting bins 6 on the conveyor 3 from a particular product bin 4 in the downstream area 43, which can be realised by having the robot 21 pick up a product from the respective product bin 4 each time and subsequently place said product into the various collecting bins 6 on the conveyor 3 according to the orders.

Once all the collecting bins 6 have been filled with products from the product bin 4 in question, at least insofar as the control system has received orders to that effect, the product bin 4 in question can be discharged from the conveyor 2 by being transferred to the discharge conveyor 32, whilst simultaneously space is created for the supply of a new product bin 4, via the supply conveyor 31, to the conveyor 2 at the upstream end thereof, after which the process can repeat itself.

It is also conceivable, however, that the control system will conclude that the relevant products from the product bin 4 must be collected not only in one or a number of collecting bins 6 on the conveyor 3, but also in a collecting bin 6 that is still present at a location upstream of the conveyor at 3, for example on the supply conveyor 33, and has not yet been transferred to the conveyor 3, therefore, but that said transfer can be expected within a foreseeable period of time. Such a situation can typically occur if, for whatever reason, the supply of product bins 4 and/or of collecting bins 6 has been interrupted, or by chance. In that case the automated order picking station 1 according to the invention provides a possibility of storing the products intended for the collecting bin(s) 6 on the supply conveyor 33 temporarily on the buffer plate 41. Seven is a typical number of collecting bins 6 on the supply conveyor 33 directly upstream of the working range of the robot 21 for which products are still stored on the buffer plate 7. Said number is equal to the maximum number of collecting bins that can be simultaneously present within the working range of the robot 21.

When after some time the collecting bin(s) 6 in question has (have) been transferred to the conveyor 3, the robot 21 can remove the products in question from the buffer plate 41 and place them into the collecting bins 6 in question. An important advantage that is thus achieved is that the length of the order picking station 1, i.e. of the conveyors 2, 3, can remain limited without the necessity to supply product bins 4 that have been transferred from the conveyor 2 to the discharge conveyor 32 to the conveyor 2 again via the supply conveyor 31, or in any case to supply a product bin 4 containing products of same type to the conveyor 2 again shortly after a product bin 4 has been transferred to the discharge conveyor 32.

The transfer of collecting bins 6 to the discharge conveyor 34 can take place as soon as the collecting bin 6 in question at the downstream end of the conveyor 3 is completely filled with all the products listed in an order or if such is not the case yet but it is to be expected that it will take some time yet before a product 4 containing the "missing" products will be supplied to the conveyor 2. In the latter case, the collecting bin 6 in question can initially be discharged via the discharge conveyor 34 and subsequently be supplied to the conveyor 3 again via the supply conveyor 33 as soon as the missing products in question become available in a product bin 4 on the conveyor 2.

It stands to reason that as the dimensions of the buffer plate 41 increase, the capacity as far as the number of products that can be buffered on the buffer plate 41 will increase as well. It may nevertheless be advantageous to keep part of the length of the conveyor 2 free from the buffer plate 41 also at the upstream end of the conveyor 2, at the location of the upstream area 42, so that at that location, too, the contents of the product bins 4 are within reach of the robot 21, as is the case in the downstream area 43. After all, if a collecting bin 6 only needs to be filled yet with one or a number of products from a product bin 4 in the upstream area 42, the products in question can be picked up from the product bin 4 in question directly after a product bin 4 has been transferred to the conveyor 2 by the supply conveyor 31 and be placed into the collecting bin 6 at the downstream end of the conveyor 3, whereupon said collecting bin 6 can be transferred to and be discharged by the supply conveyor 34, so that a new collecting bin 6 can simultaneously be supplied to the conveyor 3 from the supply conveyor 33.

In the present embodiment, the conveyors 2 and 3 provide space for seven (transversely disposed) product bins and seven (transversely disposed) collecting bins, respectively. The optimum capacity (i.e. length) of the conveyors 2 depends on various factors, such as in particular the number of different products that is to be made available for collection in a collecting container at the location of the station 1 and the size of the orders. The smaller the capacity of the conveyor 2 (and 3), the sooner there will be a need to make use of temporary storage of products on the buffer plate 41, insofar as the capacity of the buffer plate 41 allows this. In practice, a good balance between the aim of storing a limited amount of products in a collecting bin 6 via the buffer plate 41 (rather than directly) on the one hand and keeping the dimensions of the device 1 within bounds on the other hand is realised if the conveyors 2 and 3 provide space for 5 to 10 product bins 4 and collecting bins 6, respectively, wherein at least all said collecting bins 6 must be within reach of the robot 21.

The invention is not limited to the embodiment described in the foregoing, but it is primarily determined by the wording of the claims. In an alternative embodiment of a collecting device according to the invention, for example, a second conveyor 3' for collecting bins 6' may be used, which is indicated in dotted lines in figure 2. The width of the portal construction 11 will increase accordingly, as a result of which the cross members 14 and the guide 22 will have a greater length in practice, as indicated at 22' in figure 2. The supply of collecting bins 6 to the conveyor 3' can take place via the supply conveyor 33, just like the supply to the conveyor 3, whilst the discharge of collecting bins 6' from the conveyor 3' can take place via the discharge conveyor 34, just like the discharge from the conveyor 3.

According to a further variant of an automated order picking station according to the invention, two or even more conveyors 2 for product bins 4 may be used, in which case it may be decided to have the buffer plate 41 extend above only one of said conveyors 2 or above a number of said conveyors. Furthermore it is conceivable within the framework of the present invention for the buffer location to be provided beside rather than above a conveyor 2 for product bins 4, for example at a position more to the left, seen in the conveying direction 5 in figure 1. The size of the portal construction would have to be adjusted thereto, in order for the buffer location to remain within reach of the robot 21. Furthermore it is conceivable for the buffer plate 41 to be movable between a position outside the working range of the robot 21 and a position within the working range of the robot 21, such as the position that the buffer plate 41 takes up in figure 1. The latter position is in that case only taken up if the robot 21 must place a product on the buffer plate 41 or remove a product therefrom. In other situations the buffer plate 41 will be positioned outside the working range of the robot 21 and all the product bins 4 within the working range will be within reach of the robot 21.

As an alternative to an orthogonal robot system, use may also be made of a, preferably suspended, 3- or 4-armed robot with 5 or 6 degrees of freedom.

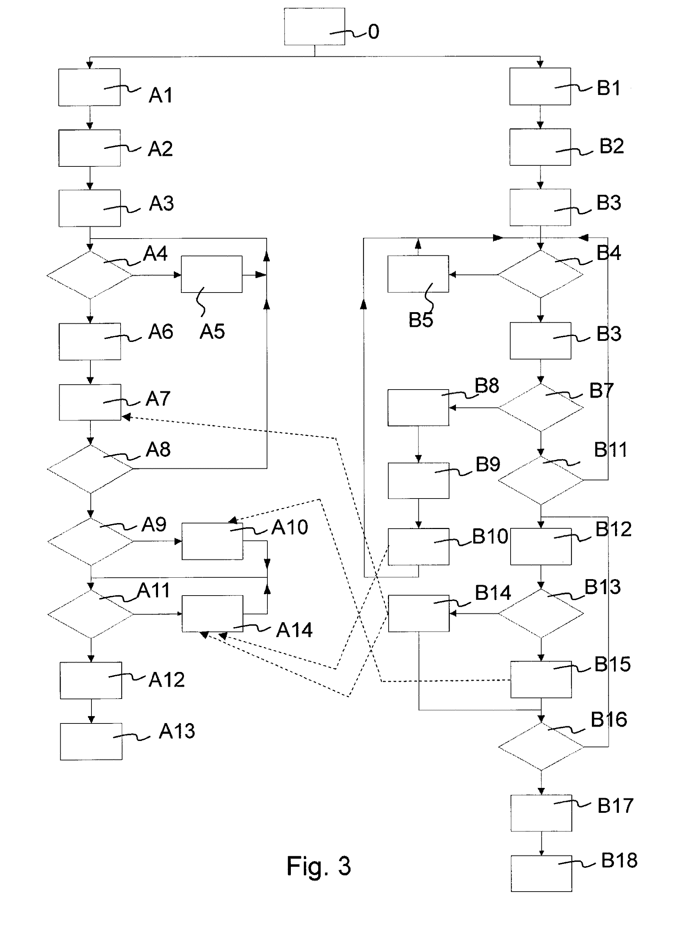

Now a preferred embodiment of a method according to the present invention will be described with reference to the flow diagram shown in figure 3.

The control means receive orders from a higher-order system control unit (step 0, "receive orders"). The control means allocate collecting containers to orders (step A1, "allocate collecting containers to orders"). Then the collecting containers in question are sent to the collecting station (A2, "send collecting bins to collecting station"). A collecting bin (or several collecting bins) that reaches the collecting station (A3, "collecting bin reaches collecting station") moves up one position if the adjacent upstream position is free, or at least becomes free at that point in time as a result of the movement of a collecting container from the position in question to a next position (A4, "next collecting container position free?"; if yes: A5, "collecting container moves up one position" and subsequently back to A4; if not: A6, "collecting container stops"). If the collecting container stops at a position in the collecting station, it can receive a product or products, if available (A7, "collecting container can receive products"). A more detailed description of the supply of products will be given below. Then it is determined whether the collecting container is at the first (at least for collecting containers) position, being the most downstream position within the collecting station (A8, "collecting container at first position?"). If this is not the case, return to A4.

If this is the case, however, it is verified whether a product or products for said order, i.e. collecting container, is (are) still present at the buffer location (A9, "product for collecting container available at buffer location?"). If yes, the pick and place manipulator (hereinafter: robot) will place the product (or products) in question into the collecting bin in question (A10, "robot places product from buffer location into collecting container"). Hereinafter a description will be given of the manner in which product find their way to the buffer location. If not, it is determined whether the first collecting container is complete, i.e. whether the order to which the collecting container present at the first position has been allocated is complete (step A11, "first collecting container complete?"). The same step A11 is carried out after step A10 has been carried out. If step A11 is true, i.e. the collecting container is complete, the collecting container in question will be moved from the collecting station (A12, "collecting container leaves collecting station") and the method is ended as far as the handling of the collecting container is concerned (A13, "end"). If step A11 is not true, the collecting container will wait until the robot has placed a product that is still missing into the collecting container (A14, "wait for placement of product by robot"). Subsequently, i.e. after step A14, step A11 is carried out again.

The following method steps are carried out for supplying a product to a collecting container in step A7, step A10 and step A14.

In step 0, the receiving of orders, the product containers required for said orders are located (B1, "locate product containers"). Then the product containers in question are sent to the collecting station (B2, "send product containers to collecting station"). When a product container reaches the collecting station (B3, "product container reaches collecting station"), it is determined whether the adjacent downstream position is free, or at least becomes free at that point in time as a result of a product container being moved from the position in question to a next position (B4, "next product container position free?); if yes: B5, "product container moves one position" and subsequently back to B4; if not: B6, "product container stops").

Then it is determined whether the product container in question is located at the last, i.e. the most upstream position within the collecting station (B7, "product container at last position?"). If yes, it is determined whether a product in the product container is a last product for the collecting container present at the first position (see the above-described step A8) (B8, "check whether product is the last product for collecting container at first position"). If yes, the product will be removed from the product container by the robot (B9, "robot removes product from product container") and be placed into the collecting container in question (B10, "robot places product into collecting container"). By carrying out step B10, step A14 is accomplished. After step B10, step B4 is carried out again. By carrying out steps B8-B10 as soon as possible (i.e. directly upon arrival of the product container in the collecting station), undesirable delays in the flow of collecting containers through the collecting station are prevented as much as possible. Steps B7, B8, B9 and B10 are optional.

If the above-mentioned criterion of step B7 is not true, it will be determined whether the product container is located at the first (at least for the flow of product containers), i.e. the most downstream position within the collecting station (B11, "product container at first position"). If not, return to B4. If yes, the robot will remove a product from the first product container in question (B12, "robot picks up product from first product container"). Then it is determined whether a collecting container is available (A7, A14) for the product in question (B13, "collecting container available for product?"). If yes, the robot will place the product into the collecting container (B14, "robot places product into collecting container"). Step A7 or A14 may thus have been accomplished. If not, the robot will place the product in question on the buffer location (B15, "robot places product on buffer location"). After step B14 and after step B15 it is determined whether the collecting container in question (B13) still needs the same product from the product container (B16, "collecting container still needs same product?"). If yes, return to step B12. If not, the product container will be moved out of the collecting station (B17, "product container out of collecting station") and the method is ended as far as the handling of the product container is concerned (B18, "end").

## Claims

1. A method for collecting products from product containers (4) in collecting containers (16) according to orders, using a device comprising product containers (4), collecting containers (6), a collecting station (1) provided with a pick and place manipulator (21) having a working range, a first conveying system (2) for conveying successive product containers (4) into and out of said working range according to a first conveying path, a second conveying system (3) for conveying successive collecting containers (6) into and out of said working range according to a second conveying path, and control means for controlling the device, the method comprising
- the processing of orders by the control means,
- the allocation by the control means of a collecting container (6) to an order for collecting products associated with the order in question in said collecting container (6),
- the conveying of successive product containers (4) containing products associated with orders into and out of the working range by means of the first conveying system (2) under the control of the control means on the basis of said orders
- the conveying of successive collecting containers (6) into and out of the working range by means of the second conveying system (3),
- the determining by the control means whether
A orders to which the collecting containers (6) within the working range have been allocated include products that are present in a product container (4) within the working range, and
- the controlling of the manipulator (21) by the control means such that, in case A, the manipulator (21) will pick up a product associated with a respective order from the product container (4) and subsequently place the product directly into the collecting container (6) that has been allocated to the order in question,
**characterized in that** the collecting station (1) of the device of which use is made further comprises at least one buffer location (41) within the working range of the manipulator (21) for temporarily accommodating a product which has been picked up from a product container (4) and which is to be placed into a collecting container (6), and by
- the determining by the control means whether
B orders to which a particular number of collecting containers (6) upstream of the working range have been allocated include products that are present in a product container (4) within the working range, and
- the controlling of the manipulator (21) by the control means such that, in case B, the manipulator (21) will pick up a product associated with a respective order from the product container (4) and subsequently place the product temporarily on the buffer location (41) within the working range and that subsequently, after the collecting container (6) that has been allocated to the order in question has arrived within the working range, the manipulator (21) will pick up the product from the buffer location (41) and place it into the collecting container (6) that has been allocated to the order in question.

2. A method according to claim 1, wherein the control means more specifically determine whether
A orders to which the collecting containers (6) within the working range have been allocated include products that are present in the most downstream product container (4) within the working range, and
B orders to which a particular number of collecting containers (6) upstream of the working range have been allocated include products that are present in the most downstream product container (4) within the working range.

3. A method according to claim 1 or 2, wherein the determining step by the control means more specifically comprises determining whether condition A or condition B applies for at least one product container (4) present within the working range each time a product container (4) enters the working range.

4. A method according to claim 1, 2 or 3, wherein the determining step by the control means more specifically comprises determining whether condition A or condition B applies for at least one product container (4) present within the working range each time a collecting container (6) enters the working range.

5. A method according to any one of the preceding claims, wherein the steps of conveying successive product containers (4) and successive collecting containers (6), respectively, into and out of the working range comprise the step of index-conveying, wherein the determining step by the control means is carried out after each indexing step of the first and the second conveying system (2; 3), respectively.

6. A method according to any one of the preceding claims, comprising the picking up, in case A, of a product from a product container (4) and the direct placement thereof into a collecting container (6) by one and the same gripping element of the manipulator.

7. A method according to any one of the preceding claims, comprising the picking up, in case B, of a product from a product container (4) and the placement thereof on a buffer location (41) as well as the picking up of the product in question from the buffer location (41) and the placement thereof into the collecting container (6) by one and the same gripping element of the manipulator (21).

8. A method according to any one of the preceding claims, wherein said particular number of collecting containers (6) according to case B is greater than half the maximum number of collecting containers (6) within the working range and smaller than double the maximum amount of collecting containers (6) within the working range.

9. A device for collecting products from product containers (4) in collecting containers (6) according to orders, comprising product containers (4), collecting containers (6), a collecting station (1) provided with a pick and place manipulator (21) having a working range, a first conveying system (2) for conveying successive product containers (4) into and out of said working range according to a first conveying path, a second conveying system (3) for conveying successive collecting containers (6) into and out of said working range according to a second conveying path, and control means for controlling the device, wherein the control means are designed for, in use,
- processing orders,
- allocating a collecting container (6) to an order for collecting products associated with the order in question in said collecting container (6),
- controlling the first conveying system (2) on the basis of said orders, such that the first conveying system (2) will convey successive product containers (4) containing products associated with said orders into and out of the working range,
- controlling the second conveying system (3), such that the second conveying system (3) will convey successive collecting containers (6) containing products associated with said orders into and out of the working range,
- determining whether
A orders to which the collecting containers (6) within the working range have been allocated include products that are present in a product container (4) within the working range, and
- controlling the manipulator (21) such that, in case A, the manipulator will pick up a product associated with a respective order from the product container (4) and subsequently place the product directly into the collecting container (6) that has been allocated to the order in question,
**characterized in that** the collecting station (1) further comprises at least one buffer location (41) within the working range of the manipulator (21) for temporarily accommodating a product which has been picked up from a product container (4) and which is to be placed into a collecting container (6), wherein the control means are further designed for, in use,
- determining whether
B orders to which a particular number of collecting containers (6) upstream of the working range have been allocated include products that are present in a product container (4) within the working range,
- controlling the manipulator (21) such that, in case B, the manipulator (21) will pick up a product associated with a respective order from the product container (4) and subsequently place the product temporarily on the buffer location (41) within the working range and that subsequently, after the collecting container (6) that has been allocated to the order in question has arrived within the working range, the manipulator (21) will pick up the product from the buffer location (41) and place it into the collecting container (6) that has been allocated to the order in question.

10. A device according to claim 9, **characterised in that** the buffer location (41) is provided directly above the first conveying path.

11. A device according to claim 9 or 10, **characterised in that** the buffer location (41) is stationary.

12. A device according to any one of claims 9 - 11, **characterised in that** the first conveying path and the second conveying path extend parallel to each other.

13. A device according to any one of claims 9 to 12, **characterised in that** the device comprises a further second conveying system (3') for conveying successive collecting containers (6) into and out of the working range according to a further second conveying path.

14. A device according to claim 13, **characterised in that** the second conveying path and the further second conveying path extend parallel to each other.

15. A device according to any one of claims 9 - 14, **characterised in that** the manipulator (41) comprises a horizontal guide (13) for guiding the gripping element, which guide extends parallel to the first conveying path and/or to the second conveying path, wherein the manipulator (41) preferably comprises a further horizontal guide (14) for guiding the gripping element, which further horizontal guide (14) extends perpendicularly to the first conveying path and/or to the second conveying path, which further horizontal guide (14) is preferably jointly movable with the gripping element along the horizontal guide (13).

## Patentansprüche

1. Verfahren zum Sammeln von Produkten aus Produktbehältern (4) in Sammelbehältern (16) gemäß Aufträgen, unter Verwendung einer Vorrichtung mit Produktbehältern (4), Sammelbehältern (6), einer Sammelstation (1), die mit einem Aufnahme- und Ablege-Manipulator (21) versehen ist, der einen Arbeitsbereich hat, einem ersten Fördersystem (2) zum Fördern aufeinander folgender Produktbehälter (4) in den und aus dem Arbeitsbereich entsprechend einem ersten Förderweg, einem zweiten Fördersystem (3) zum Fördern aufeinander folgender Sammelbehälter (6) in den und aus dem Arbeitsbereich entsprechend einem zweiten Förderweg, und Steuereinrichtungen zur Steuerung der Vorrichtung, wobei das Verfahren Folgendes umfasst:
- die Bearbeitung von Aufträgen durch die Steuereinrichtungen,
- die Zuweisung eines Sammelbehälters (6) an einen Auftrag zum Sammeln von Produkten, die dem betreffenden Auftrag zugeordnet sind, in dem Sammelbehälter (6) durch die Steuereinrichtungen,
- die Förderung aufeinander folgender Produktbehälter (4), die Produkte enthalten, die Aufträgen zugeordnet sind, in den und aus dem Arbeitsbereich mittels des ersten Fördersystems (2) anhand der Aufträge unter der Steuerung der Steuereinrichtungen,
- die Förderung aufeinander folgender Sammelbehälter (6) in den und aus dem Arbeitsbereich mittels des zweiten Fördersystems (3),
- die Feststellung durch die Steuereinrichtungen, ob
A Aufträge, denen die Sammelbehälter (6) innerhalb des Arbeitsbereichs zugewiesen worden sind, Produkte beinhalten, die sich in einem Produktbehälter (4) innerhalb des Arbeitsbereichs befinden, und
- die Steuerung des Manipulators (21) durch die Steuereinrichtungen derart, dass im Fall A der Manipulator (21) ein Produkt, das einem jeweiligen Auftrag zugeordnet ist, aus dem Produktbehälter (4) aufnimmt und das Produkt anschließend unmittelbar in den Sammelbehälter (6) legt, der dem betreffenden Auftrag zugewiesen worden ist,
**dadurch gekennzeichnet, dass** die Sammelstation (1) der Vorrichtung, von der Gebrauch gemacht wird, ferner wenigstens einen Pufferplatz (41) innerhalb des Arbeitsbereichs des Manipulators (21) umfasst, um ein Produkt, das aus einem Produktbehälter (4) aufgenommen worden ist und in einen Sammelbehälter (6) gelegt werden soll, vorübergehend unterzubringen,
und durch
- die Feststellung durch die Steuereinrichtungen, ob
B Aufträge, denen eine bestimmte Anzahl Sammelbehälter (6) stromaufwärts des Arbeitsbereichs zugewiesen worden sind, Produkte beinhalten, die sich in einem Produktbehälter (4) innerhalb des Arbeitsbereichs befinden, und
- die Steuerung des Manipulators (21) durch die Steuereinrichtungen derart, dass im Fall B der Manipulator (21) ein Produkt, das einem jeweiligen Auftrag zugeordnet ist, aus dem Produktbehälter (4) aufnimmt und das Produkt anschließend vorübergehend auf dem Pufferplatz (41) innerhalb des Arbeitsbereichs ablegt, und dass anschließend, nachdem der Sammelbehälter (6), der dem betreffenden Auftrag zugewiesen worden ist, in dem Arbeitsbereich angekommen ist, der Manipulator (21) das Produkt von dem Pufferplatz (41) aufnimmt und es in den Sammelbehälter (6) legt, der dem betreffenden Auftrag zugewiesen worden ist.

2. Verfahren nach Anspruch 1, bei dem die Steuereinrichtungen insbesondere feststellen, ob
A Aufträge, denen die Sammelbehälter (6) innerhalb des Arbeitsbereichs zugewiesen worden sind, Produkte beinhalten, die sich in dem am weitesten stromabwärts gelegenen Produktbehälter (4) innerhalb des Arbeitsbereichs befinden, und
B Aufträge, denen eine bestimmte Anzahl Sammelbehälter (6) stromaufwärts des Arbeitsbereichs zugewiesen worden sind, Produkte beinhalten, die sich in dem am weitesten stromabwärts gelegenen Produktbehälter (4) innerhalb des Arbeitsbereichs befinden.

3. Verfahren nach Anspruch 1 oder 2, bei dem der Feststellungsschritt durch die Steuereinrichtungen jedes Mal, wenn ein Produktbehälter (4) in den Arbeitsbereich eintritt, insbesondere die Feststellung umfasst, ob Bedingung A oder Bedingung B auf wenigstens einen Produktbehälter (4) zutrifft, der sich innerhalb des Arbeitsbereichs befindet.

4. Verfahren nach Anspruch 1, 2 oder 3, bei dem der Feststellungsschritt durch die Steuereinrichtungen jedes Mal, wenn ein Sammelbehälter (6) in den Arbeitsbereich eintritt, insbesondere die Feststellung umfasst, ob Bedingung A oder Bedingung B auf wenigstens einen Produktbehälter (4) zutrifft, der sich innerhalb des Arbeitsbereichs befindet.

5. Verfahren nach einem der vorhergehenden Ansprüche, bei dem die Schritte der Förderung aufeinander folgender Produktbehälter (4) bzw. aufeinander folgender Sammelbehälter (6) in den und aus dem Arbeitsbereich den Schritt der Indexförderung umfassen, wobei der Feststellungsschritt durch die Steuereinrichtungen nach jedem Indexierungsschritt des ersten bzw. des zweiten Fördersystems (2; 3) durchgeführt wird.

6. Verfahren nach einem der vorhergehenden Ansprüche, das im Fall A das Aufnehmen eines Produkts aus einem Produktbehälter (4) und das unmittelbare Einlegen des Produkts in einen Sammelbehälter (6) durch ein und dasselbe Greifelement des Manipulators umfasst.

7. Verfahren nach einem der vorhergehenden Ansprüche, das im Fall B das Aufnehmen eines Produkts aus einem Produktbehälter (4) und das Ablegen des Produkts auf einem Pufferplatz (41) sowie das Aufnehmen des betreffenden Produkts von dem Pufferplatz (41) und das Einlegen des Produkts in den Sammelbehälter (6) durch ein und dasselbe Greifelement des Manipulators (21) umfasst.

8. Verfahren nach einem der vorhergehenden Ansprüche, bei dem die bestimmte Anzahl Sammelbehälter (6) gemäß Fall B größer als die Hälfte der maximalen Anzahl Sammelbehälter (6) innerhalb des Arbeitsbereichs und kleiner als das Doppelte der maximalen Menge an Sammelbehältern (6) innerhalb des Arbeitsbereichs ist.

9. Vorrichtung zum Sammeln von Produkten aus Produktbehältern (4) in Sammelbehältern (6) gemäß Aufträgen, mit Produktbehältern (4), Sammelbehältern (6), einer Sammelstation (1), die mit einem Aufnahme- und Ablege-Manipulator (21) versehen ist, der einen Arbeitsbereich hat, einem ersten Fördersystem (2) zum Fördern aufeinander folgender Produktbehälter (4) in den und aus dem Arbeitsbereich entsprechend einem ersten Förderweg, einem zweiten Fördersystem (3) zum Fördern aufeinander folgender Sammelbehälter (6) in den und aus dem Arbeitsbereich entsprechend einem zweiten Förderweg, und Steuereinrichtungen zur Steuerung der Vorrichtung, wobei die Steuereinrichtungen dazu ausgelegt sind, im Gebrauch
- Aufträge zu bearbeiten,
- einen Sammelbehälter (6) einem Auftrag zuzuweisen, um Produkte, die dem betreffenden Auftrag zugeordnet sind, in dem Sammelbehälter (6) zu sammeln,
- das erste Fördersystem (2) anhand der Aufträge so zu steuern, dass das erste Fördersystem (2) aufeinander folgende Produktbehälter (4), die Produkte enthalten, die den Aufträgen zugeordnet sind, in den und aus dem Arbeitsbereich fördert,
- das zweite Fördersystem (3) so zu steuern, dass das zweite Fördersystem (3) aufeinander folgende Sammelbehälter (6), die Produkte enthalten, die den Aufträgen zugeordnet sind, in den und aus dem Arbeitsbereich fördert,
- festzustellen, ob
A Aufträge, denen die Sammelbehälter (6) innerhalb des Arbeitsbereichs zugewiesen worden sind, Produkte beinhalten, die sich in einem Produktbehälter (4) innerhalb des Arbeitsbereichs befinden, und
- den Manipulator (21) so zu steuern, dass im Fall A der Manipulator ein Produkt, das einem jeweiligen Auftrag zugeordnet ist, aus dem Produktbehälter (4) aufnimmt und das Produkt anschließend unmittelbar in den Sammelbehälter (6) legt, der dem betreffenden Auftrag zugewiesen worden ist,
**dadurch gekennzeichnet, dass** die Sammelstation (1) ferner wenigstens einen Pufferplatz (41) innerhalb des Arbeitsbereichs des Manipulators (21) umfasst, um ein Produkt, das aus einem Produktbehälter (4) aufgenommen worden ist und in einen Sammelbehälter (6) gelegt werden soll, vorübergehend unterzubringen, wobei die Steuereinrichtungen ferner dazu ausgelegt sind, im Gebrauch
- festzustellen, ob
B Aufträge, denen eine bestimmte Anzahl Sammelbehälter (6) stromaufwärts des Arbeitsbereichs zugewiesen worden sind, Produkte beinhalten, die sich in einem Produktbehälter (4) innerhalb des Arbeitsbereichs befinden,
- den Manipulator (21) so zu steuern, dass im Fall B der Manipulator (21) ein Produkt, das einem jeweiligen Auftrag zugeordnet ist, aus dem Produktbehälter (4) aufnimmt und das Produkt anschließend vorübergehend auf dem Pufferplatz (41) innerhalb des Arbeitsbereichs ablegt, und dass anschließend, nachdem der Sammelbehälter (6), der dem betreffenden Auftrag zugewiesen worden ist, in dem Arbeitsbereich angekommen ist, der Manipulator (21) das Produkt von dem Pufferplatz (41) aufnimmt und es in den Sammelbehälter (6) legt, der dem betreffenden Auftrag zugewiesen worden ist.

10. Vorrichtung nach Anspruch 9, **dadurch gekennzeichnet, dass** der Pufferplatz (41) unmittelbar oberhalb des ersten Förderweges vorgesehen ist.

11. Vorrichtung nach Anspruch 9 oder 10, **dadurch gekennzeichnet, dass** der Pufferplatz (41) ortsfest ist.

12. Vorrichtung nach einem der Ansprüche 9 bis 11, **dadurch gekennzeichnet, dass** der erste Förderweg und der zweite Förderweg parallel zueinander verlaufen.

13. Vorrichtung nach einem der Ansprüche 9 bis 12, **dadurch gekennzeichnet, dass** die Vorrichtung ein weiteres zweites Fördersystem (3') zum Fördern aufeinander folgender Sammelbehälter (6) in den und aus dem Arbeitsbereich entsprechend einem weiteren zweiten Förderweg umfasst.

14. Vorrichtung nach Anspruch 13, **dadurch gekennzeichnet, dass** der zweite Förderweg und der weitere zweite Förderweg parallel zueinander verlaufen.

15. Vorrichtung nach einem der Ansprüche 9 bis 14, **dadurch gekennzeichnet, dass** der Manipulator (41) eine horizontale Führung (13) zum Führen des Greifelements umfasst, wobei die Führung parallel zum ersten Förderweg und/oder zum zweiten Förderweg verläuft, wobei der Manipulator (41) vorzugsweise eine weitere horizontale Führung (14) zum Führen des Greifelements umfasst, wobei die weitere horizontale Führung (14) senkrecht zum ersten Förderweg und/oder zum zweiten Förderweg verläuft, wobei die weitere horizontale Führung (14) vorzugsweise gemeinsam mit dem Greifelement längs der horizontalen Führung (13) bewegbar ist.

## Revendications

1. Procédé pour collecter des produits de récipients de produits (4) dans des récipients de collecte (16) selon des ordres, en utilisant un dispositif comprenant des récipients de produits (4), des récipients de collecte (6), une station de collecte (1) prévue avec un manipulateur de bras de transfert (21) ayant un espace de travail, un premier système de transport (2) pour transporter des récipients de produits (4) successifs dans et hors dudit espace de travail selon une première trajectoire de transport, un second système de transport (3) pour transporter des récipients de collecte (6) successifs dans et hors dudit espace de travail selon une seconde trajectoire de transport et des moyens de commande pour commander le dispositif, le procédé comprenant les étapes consistant à :
- traiter les ordres par les moyens de commande,
- affecter, par les moyens de commande, un récipient de collecte (6) à un ordre pour collecter les produits associés à l'ordre en question dans ledit récipient de collecte (6),
- transporter des récipients de produits (4) successifs contenant des produits associés aux ordres dans et hors de l'espace de travail au moyen du premier système de transport (2) sous le contrôle des moyens de commande en fonction desdits ordres,
- transporter les récipients de collecte (6) successifs dans et hors de l'espace de travail au moyen du second système de transport (3),
- déterminer par les moyens de commande, si :
A. les ordres auxquels ont été affectés les récipients de collecte (6) dans l'espace de travail, comprennent des produits qui sont présents dans un récipient de produits (4) dans l'espace de travail, et
- commander le manipulateur (21) par les moyens de commande de sorte que, dans le cas A, le manipulateur (21) prélève un produit associé à un ordre respectif dans le récipient de produits (4) et place ensuite le produit directement dans le récipient de collecte (6) qui a été affecté à l'ordre en question,
**caractérisé en ce que** la station de collecte (1) du dispositif que l'on utilise, comprend en outre au moins un emplacement tampon (41) dans l'espace de travail du manipulateur (21) pour loger temporairement un produit qui a été prélevé dans un récipient de produits (4) et qui doit être placé dans un récipient de collecte (6), et par l'étape consistant à :
- déterminer, par les moyens de commande, si :
B. les ordres auxquels a été affecté un nombre particulier de récipients de collecte (6) en amont de l'espace de travail, comprennent des produits qui sont présents dans un récipient de produits (4) dans l'espace de travail, et
- commander le manipulateur (21) par les moyens de commande de sorte que, dans le cas B, le manipulateur (21) prélève un produit associé à un ordre respectif dans le récipient de produits (4) et place ensuite le produit temporairement sur l'emplacement tampon (41) dans l'espace de travail et de sorte que, ensuite, après que le récipient de collecte (6) qui a été affecté à l'ordre en question, est arrivé dans l'espace de travail, le manipulateur (21) prélève le produit de l'emplacement tampon (41) et le place dans le récipient de collecte (6) qui a été affecté à l'ordre en question.

2. Procédé selon la revendication 1, dans lequel les moyens de commande déterminent plus spécifiquement, si :
A. les ordres auxquels ont été affectés les récipients de collecte (6) dans l'espace de travail, comprennent des produits qui sont présents dans le récipient de produits (4) le plus en aval dans l'espace de travail, et
B. les ordres auxquels a été affecté un nombre particulier de récipients de collecte (6) en amont de l'espace de travail, comprennent des produits qui sont présents dans le récipient de produits (4) le plus en aval dans l'espace de travail.

3. Procédé selon la revendication 1 ou 2, dans lequel l'étape de détermination, par les moyens de commande, comprend plus spécifiquement l'étape consistant à déterminer si la condition A ou la condition B s'applique pour au moins un récipient de produits (4) présent dans l'espace de travail chaque fois qu'un récipient de produits (4) pénètre dans l'espace de travail.

4. Procédé selon la revendication 1, 2 ou 3, dans lequel l'étape de détermination par les moyens de commande comprend plus spécifiquement l'étape consistant à déterminer si la condition A ou la condition B s'applique à au moins un récipient de produits (4) présent dans l'espace de travail chaque fois qu'un récipient de collecte (6) pénètre dans l'espace de travail.

5. Procédé selon l'une quelconque des revendications précédentes, dans lequel les étapes consistant à transporter des récipients de produits (4) successifs et des récipients de collecte (6) successifs, respectivement, dans et hors de l'espace de travail, comprennent l'étape de transport par indexation, dans lequel l'étape de détermination par les moyens de commande est réalisée après chaque étape d'indexation du premier et du second système de transport (2 ; 3), respectivement.

6. Procédé selon l'une quelconque des revendications précédentes, comprenant l'étape consistant à prélever, dans le cas A, un produit dans un récipient de produits (4) et le mettre en place directement dans un récipient de collecte (6) par un seul et même élément de préhension du manipulateur.

7. Procédé selon l'une quelconque des revendications précédentes, comprenant l'étape consistant à prélever, dans le cas B, un produit dans un récipient de produits (4) et le mettre en place sur un emplacement tampon (41) ainsi que l'étape consistant à prélever le produit en question de l'emplacement tampon (41) et le mettre en place dans le récipient de collecte (6) par un seul et même élément de préhension du manipulateur (21).

8. Procédé selon l'une quelconque des revendications précédentes, dans lequel ledit nombre particulier de récipients de collecte (6) selon le cas B, est supérieur à la moitié du nombre maximum de récipients de collecte (6) dans l'espace de travail et inférieur au double de la quantité maximale de récipients de collecte (6) dans l'espace de travail.

9. Dispositif pour collecter des produits des récipients de produits (4) dans des récipients de collecte (6) selon des ordres, comprenant des récipients de produits (4), des récipients de collecte (6), une station de collecte (1) prévue avec un manipulateur de bras de transfert (21) ayant un espace de travail, un premier système de transport (2) pour transporter des récipients de produits (4) successifs dans et hors dudit espace de travail selon une première trajectoire de transport, un second système de transport (3) pour transporter des récipients de collecte (6) successifs dans et hors dudit espace de travail selon une seconde trajectoire de transport et des moyens de commande pour commander le dispositif, dans lequel les moyens de commande sont conçus, à l'usage, pour :
- traiter des ordres,
- affecter un récipient de collecte (6) à un ordre pour collecter des produits associés à l'ordre en question dans ledit récipient de collecte (6),
- commander le premier système de transport (2) sur la base desdits ordres, de sorte que le premier système de transport (2) transporte des récipients de produits (4) successifs contenant des produits associés auxdits ordres dans et hors de l'espace de travail,
- commander ledit second système de transport (3), de sorte que le second système de transport (3) transporte des récipients de collecte (6) successifs contenant des produits associés auxdits ordres dans et hors de l'espace de travail,
- déterminer si :
A. les ordres auxquels ont été affectés les récipients de collecte (6) dans l'espace de travail, comprennent des produits qui sont présents dans un récipient de produits (4) dans l'espace de travail, et
- commander le manipulateur (21) de sorte que, dans le cas A, le manipulateur prélève un produit associé à un ordre respectif dans le récipient de produits (4) et place ensuite le produit directement dans le récipient de collecte (6) qui a été affecté à l'ordre en question,
**caractérisé en ce que** la station de collecte (1) comprend en outre au moins un emplacement tampon (41) dans l'espace de travail du manipulateur (21) pour loger temporairement un produit qui a été prélevé dans un récipient de produits (4) et qui doit être placé dans un récipient de collecte (6), dans lequel les moyens de commande sont en outre conçus, à l'usage, pour :
- déterminer si :
B. les ordres auxquels a été affecté un nombre particulier de récipients de collecte (6) en amont de l'espace de travail, comprennent des produits qui sont présents dans un récipient de produits (4) dans l'espace de travail,
- commander le manipulateur (21) de sorte que, dans le cas B, le manipulateur (21) prélève un produit associé à l'ordre respectif dans le récipient de produits (4) et place ensuite le produit temporairement sur l'emplacement tampon (41) dans l'espace de travail et de sorte que, ensuite, après que le récipient de collecte (6) qui a été affecté à l'ordre en question est arrivé dans l'espace de travail, le manipulateur (21) prélève le produit de l'emplacement tampon (41) et le place dans le récipient de collecte (6) qui a été affecté à l'ordre en question.

10. Dispositif selon la revendication 9, **caractérisé en ce que** l'emplacement tampon (41) est prévu directement au-dessus de la première trajectoire de transport.

11. Dispositif selon la revendication 9 ou 10, **caractérisé en ce que** l'emplacement tampon (41) est fixe.

12. Dispositif selon l'une quelconque des revendications 9 à 11, **caractérisé en ce que** la première trajectoire de transport et la seconde trajectoire de transport s'étendent parallèlement entre elles.

13. Dispositif selon l'une quelconque des revendications 9 à 12, **caractérisé en ce que** le dispositif comprend un second système de transport (3') supplémentaire pour transporter des récipients de collecte (6) successifs dans et hors de l'espace de travail selon une seconde trajectoire de transport supplémentaire.

14. Dispositif selon la revendication 13, **caractérisé en ce que** la seconde trajectoire de transport et la seconde trajectoire de transport supplémentaire s'étendent parallèlement entre elles.

15. Dispositif selon l'une quelconque des revendications 9 à 14, **caractérisé en ce que** le manipulateur (41) comprend un guide horizontal (13) pour guider l'élément de préhension, lequel guide s'étend parallèlement à la première trajectoire de transport et/ou à la seconde trajectoire de transport, dans lequel le manipulateur (41) comprend de préférence un guide horizontal supplémentaire (14) pour guider l'élément de préhension, lequel guide horizontal supplémentaire (14) s'étend perpendiculairement à la première trajectoire de transport et/ou à la seconde trajectoire de transport, lequel guide horizontal supplémentaire (14) est de préférence mobile conjointement avec l'élément de préhension le long du guide horizontal (13).
